**Europäisches Patentamt**

**European Patent Office**

**Office européen des brevets**

(11) Veröffentlichungsnummer: **0 197 327**
**A2**

## (12) EUROPÄISCHE PATENTANMELDUNG

(21) Anmeldenummer: **86103125.0**

(51) Int. Cl.⁴: **C01F 11/18**

(22) Anmeldetag: **08.03.86**

(30) Priorität: **23.03.85 DE 3510695**

(43) Veröffentlichungstag der Anmeldung:
**15.10.86 Patentblatt 86/42**

(84) Benannte Vertragsstaaten:
**AT DE FR GB IT NL SE**

(71) Anmelder: **HOECHST AKTIENGESELLSCHAFT**
**Postfach 80 03 20**
**D-6230 Frankfurt am Main 80(DE)**

(72) Erfinder: **Cremer, Josef, Dr.**
**Karl-Schurz-Strasse 6**
**D-5030 Hürth(DE)**
Erfinder: **Holz, Josef**
**Theodor-Heuss-Strasse 3**
**D-5042 Erftstadt(DE)**

(54) **Verfahren zur Herstellung von feinteiligem Calciumcarbonat grosser Reinheit und hohem Weissgrad.**

(57) Beim Verfahren zur Herstellung von feinteiligem Calciumcarbonat großer Reinheit und hohem Weißgrad wird in einer Lösestufe eine Calciumhydroxidaufschlämmung unter Zusatz von Ammonium-oder Aminsalz gelöst, die gebildete Calciumsalzlösung mit Aktivkohle geklärt und in einer Fällstufe aus der geklärten Calciumsalzlösung durch Umsetzung mit Kohlendioxid das feinteilige Calciumcarbonat ausgefällt.

EP 0 197 327 A2

## Verfahren zur Herstellung von feinteiligem Calciumcarbonat großer Reinheit und hohem Weißgrad

Die vorliegende Erfindung betrifft ein Verfahren zur Herstellung von feinteiligem Calciumcarbonat großer Reinheit und hohem Weißgrad durch Umsetzung von wäßriger Calciumhydroxidaufschlämmung mit einem Kohlendioxid enthaltenden Gas.

Feinteiliges Calciumcarbonat findet zunehmende Verwendung als Streckmittel und Pigment in Anstrichmitteln und Farblacken, als Füllmittel in Papier, Pappe und Linoleum, als Putz-und Poliermittel, insbesondere in Zahnpasten und kosmetischen Artikeln, sowie als Calcium carbonicum praecipitatum für pharmazeutische Zwecke, beispielsweise als Mittel gegen Sodbrennen.

Bei der Herstellung von Düngemitteln nach dem Odda-Verfahren wird feinkörniges Phosphaterz mit Salpetersäure aufgeschlossen. Das hierbei gelöste Calcium wird bei Temperaturen von -5 bis 15°C als Ca $(NO_3)_2$. 4 $H_2O$ ausgefällt und von der gebildeten Phosphorsäure abfiltriert. Dieses bei der Düngerherstellung anfallende Calciumnitrat-Tetrahydrat wird mit Ammoniak und Kohlendioxid in Ammoniumnitrat und Calciumcarbonat überführt. Nach einer Filtration und Trocknung wird ein grobkörniges Calciumcarbonat erhalten.

Das so erhaltene Calciumcarbonat eignet sich nur für solche Einsatzgebiete, bei denen es nicht auf die Produkt reinheit und hohen Weißgrad ankommt, wie beispielsweise als Füllmittel in Linoleum oder Pappen.

In der DE-AS 1 142 851 wird die Herstellung eines feinteiligen Calciumcarbonates beschrieben, das durch eine Fällungsreaktion in Gegenwart von löslichen Fluoriden oder Silicofluoriden erhalten wird. Dieses Verfahren hat den Nachteil, daß von einer reinen Calciumsalzlösung ausgegangen werden muß und Fluorid in das Calciumcarbonat eingebaut wird, das somit nicht allgemein einsetzbar ist.

In der DE-AS 1 116 203 ist vorgeschlagen worden, Calciumcarbonat in Gegenwart eines Alkali-oder Erdalkalisalzes der Nitrilotriessigsäure in feindisperser Form auszufällen. Hier muß ebenfalls von einer chemisch reinen Calciumhydroxidaufschlämmung ausgegangen werden, da keine Reinigungsstufe möglich ist. Hinzu kommt, daß Nitrilotriessigsäure relativ teuer ist und die Mutterlauge zu Abwasserproblemen Anlaß gibt.

Es war daher die Aufgabe gestellt, ein feinteiliges Calciumcarbonat großer Reinheit und hohem Weißgrad aus stark verunreinigten Brand-und/oder Löschkalkaufschlämmungen, insbesondere aus Karbidkalk-Hydrat, einem Abfallprodukt der elektrothermischen Acetylenerzeugung aus Kalk und Kohle, zu gewinnen.

Die Erfindung betrifft somit ein Verfahren zur Herstellung von feinteiligem Calciumcarbonat großer Reinheit und hohem Weißgrad durch Umsetzung von wäßriger Calciumhydroxidaufschlämmung mit einem Kohlendioxid enthaltenden Gas, das dadurch gekennzeichnet ist, daß in einer Lösestufe eine Calciumhydroxidaufschlämmung mit Ammonium-oder Aminsalz umgesetzt wird, in einer anschließenden Filtrationsstufe die gebildete Calciumsalzlösung von Unge löstem befreit wird, die Calciumsalzlösung mit Aktivkohle geklärt wird und nach Abtrennen der Aktivkohle in einer Fällstufe aus der Calciumsalzlösung durch Umsetzung mit Kohlendioxid das Calciumcarbonat ausgefällt und, nach Abtrennung der gebildeten Mutterlauge, gewaschen und getrocknet wird.

Obwohl alle Anionen eingesetzt werden können, welche wasserlösliche Calciumsalze bilden, haben sich folgende Salze besonders gut bewährt:Als Ammoniumsalz $NH_4NO_3$, $NH_4Cl$ oder $HCO_2NH_4$ und als Aminsalz das Chlorid von kurzkettigen primären oder sekundären Aminen. Die Salze können gleichermaßen in fester oder in in Wasser gelöster Form in die Lösestufe eingebracht werden. Gute Umsetzungsraten werden erzielt, wenn in der Lösestufe ein äquivalentes Verhältnis von Ca : $NH_4^+$ = 1 : 2,0 bis 2,2 oder von Ca : $R$-$NH_3^+$ = 1 : 2,0 bis 2,2 oder von Ca : $R_1R_2NH_2^+$ = 1 : 2,0 bis 2,2 eingesetzt wird und die Umsetzung des Ammonium-oder Aminsalzes mit der Calciumhydroxidaufschlämmung in der 1- bis 11-fachen, insbesonderen 3-bis 6-fachen Gewichtsmenge Wasser erfolgt, bezogen auf die eingesetzte Menge wasserfreies Kalk-Hydrat.

Besonders reines Calciumcarbonat wird erhalten, wenn die Calciumsalzlösung nach der Filtrationsstufe mit 0,1 bis 3,0 Gew% Aktivkohle, bezogen auf die eingesetzte Menge wasserfreies Kalk-Hydrat, geklärt wird.

Das erfindungsgemäße Verfahren liefert gleichermaßen gute Ergebnisse, wenn die Lösestufe in einem Rührbehälter unter einem Druck von 0,1 bis 10 bar, insbesondere bei Normal-Druck betrieben wird und die Filtrationsstufe zur Reinigung der Calciumsalzlösung von dem Ungelösten eine Druckfiltration ist. Zweckmäßig ist, wenn die Abtrennung der Aktivkohle in einer Druckfiltration erfolgt.

Gute Ausbeuten an feinteiligem Calciumcarbonat werden erzielt, wenn in der Fällstufe in die gereinigte Calciumsalzlösung reines Kohlendioxid oder ein Kohlendioxid enthaltendes Gas eingeleitet wird, bis ein End-pH-Wert von 4,0 bis 8,0, insbesondere 5,0 bis 7,0, erreicht ist.

Die Fällstufe kann in einem Rührbehälter unter einem $CO_2$-Partialdruck von 0,1 bis 10 bar betrieben werden. Besonders reines Calciumcarbonat wird erhalten, wenn nach Abtrennung des Calciumcarbonates von der gebildeten Mutterlauge das Calciumcarbonat mit der 1-bis 5-fachen Wassermenge, bezogen auf die Calciumcarbonatmenge, gewaschen wird. Zur Vermeidung einer Umweltverschmutzung und zur Reagenzkosteneinsparung wird das Verfahren zweckmäßig als Recycling-Verfahren ausgebildet, wobei die in der Fällstufe gebildete Mutterlauge rückgeführt wird in die Lösestufe zur erneuten Umsetzung mit Kalk-Hydrat.

Das Verfahren ist besonders geeignet, wenn verunreinigte Calciumhydroxidaufschlämmungen, insbesondere Karbidkalk-Hydrat, ein Nebenprodukt der elektrothermischen Acetylenerzeugung aus Kalk und Kohle, als Ausgangsprodukt verarbeitet werden soll. Es kann günstig sein, wenn die anfallenden Waschwässer in aufkonzentrierter Form rückgeführt werden, wobei die zur Aufkonzentrierung der Waschwässer erforderliche Energie durch Verbrennung von Kohlenmonoxid enthalten werden kann.

Mit dem erfindungsgemäßen ist es nunmehr möglich, ein feinteiliges Calciumcarbonat folgender Spezifikation herzustellen:

| Verunreinigungen: | | | |
|---|---|---|---|
| | MgO | < 0,05 | Gew% |
| | $Al_2O_3$ | < 0,01 | Gew% |
| | $SiO_2$ | < 0,005 | Gew% |
| | Mn | < 0,005 | Gew% |
| | Fe | < 0,0005 | Gew% |
| | F | < 25 | ppm |
| | Pb | < 1 | ppm |
| | As | < 0,5 | ppm |
| | Cd | < 0,2 | ppm |
| | Hg | < 0,05 | ppm |

| | | |
|---|---|---|
| Weißgrad: | > 99,5 | % |
| Kornfeinheit: | 99 | Gew% < 44 /um |
| Kornverteilung: | 60 - 80 Gew% | 7,8 - 31 /um |
| Unlösliches in HCl: | < 0,01 | Gew% |
| Löslichkeit in Essigsäure: | klar löslich | |

Die Messung des Weißgrades erfolgte mit dem elektrischen Remissionsphotometer ® "Elrepho" der Fa. Carl Zeiss, Oberkochen, Filter R 57 (577 nm) im Vergleich zu Calciumcarbonat, Qualität p.A. der Fa. Riedel de Haen AG, Seelze, als Standard (100%). Die Messung der Korngröße erfolgte mit "Microtrac ® Particle-Size Analyzer" der Fa. Leeds & Northrup GmbH, Düsseldorf.

Beim erfindungsgemäßen Verfahren muß bei der Auflösung des Kalkhydrates mit Ammoniumsalzen die Löslichkeit des jeweils gebildeten Calciumsalzes und des entstehenden Ammoniaks berücksichtigt werden, welches gasförmig, abhängig von der Konzentration in der wässerigen Phase, entweichen kann. Dem kann man begegnen, indem man die Umsetzung in großen

Lösebehältern mit verdünnten Salzkonzentrationen vornimmt oder -zur Kosteneinsparung -kleinere geschlossene Lösebehälter unter leichtem Überdruck betreibt.

Bei der Ausfällung des Calciumcarbonates durch Einleiten von Kohlendioxid wird durch Arbeiten unter Druck eine höhere Löslichkeit und damit größere Umsetzungsgeschwindigkeit des Kohlendioxids erreicht; hiergegen sind die höheren Investitionskosten für Druckverfahren zu rechnen.

Die Einhaltung bestimmter Temperaturen ist weder in der Löse-noch in der Fällstufe kritisch und kann in weiten Bereichen zwischen -20 und +100°C schwanken, wobei niedrigere Temperaturen eine höhere $NH_3$-und $CO_2$-Löslichkeit bewirken.

Die Abtrennung des feinteiligen Calciumcarbonats von der Mutterlauge ist unproblematisch und kann vorzugsweise mittels einer Vakuum-Filtration durchgeführt werden, da die Kornverteilung des gefällten Calciumcarbonats weitgehend einem Einkornspektrum entspricht. Der Filterkuchen wird zur Entfernung der Mutterlauge mit Wasser gewaschen, wobei das Waschwasser nach einer eventuellen Aufkonzentrierung wieder in die Lösestufe eingespeist werden kann.

Feinteiliges Calciumcarbonat kann in einem besonders umweltfreundlichen Verfahren hergestellt werde, wenn die aus der Fällstufe anfallende, die Ammoniumsalze enthaltende Mutterlauge als Lösemittel für die Kalk-Hydrat-Aufschlämmung in die Lösestufe rückgeführt wird. Auch nach mehr als 20-maliger Rückführung der Mutterlauge wurde keine Produktqualitätsänderung beobachtet.

Beispiel 1

120 Gew.-Teile $NH_4Cl$ wurden in einem Rührbehälter in 400 Gew.-Teilen Wasser gelöst und mit 74 Gew.-Teilen Karbidkalk-Hydrat versetzt und 15 Minuten lang bei Normaldruck gerührt. Über eine Druckfiltration bei 1 bar Überdruck wurde das Ungelöste abgetrennt. Die Calciumsalzlösung wurde unter Zusatz von 1 Gew.-Teil Aktivkohle gerührt und anschließend über ein Druckfilter geleitet. In die klare Calciumsalzlösung wurde käufliches Kohlendioxid aus einer Stahlflasche eingeleitet bis zu einem pH-Wert von 6,5. Das ausgefällte Calciumcarbonat wurde auf einem Vakuumtrommelfilter abgetrennt und mit 85 Gew.-Teilen Wasser gewaschen und bei 150°C getrocknet. Die Produkteigenschaften und Ausbeuten sind in den Tabellen 1 -3 aufgelistet.

Das eingesetzte Karbidkalk-Hydrat hatte folgende Zusammensetzung:

| | |
|---|---|
| CaO | 72,4 Gew% |
| MgO | 0,06 Gew% |
| $Al_2O_3$ | 1,3 Gew% |
| $SiO_2$ | 2,5 Gew% |
| Fe | 1,1 Gew% |
| Mn | 0,01 Gew% |
| C, ges. | 1,5 Gew% |

Der Rückstand aus der Lösestufe enthielt:

| CaO | 33,3 Gew% |
|---|---|
| MgO | 0,39 Gew% |
| $Al_2O_3$ | 13,7 Gew% |
| $SiO_2$ | 25,8 Gew% |
| Fe | 4,5 Gew% |
| Mn | 0,1 Gew% |
| C, ges. | 9,8 Gew% |

Beispiel 2 (Recycling-Verfahren)

Die im Beispiel 1 in der Calciumcarbonatfällstufe anfallende Mutterlauge wurde zur Auflösung von weiterem Karbidkalk-Hydrat rückgeführt und mit 74 Gew.-Teilen Karbidkalk-Hydrat (Analyse wie im Beispiel 1) versetzt und weiter, wie im Beispiel 1 beschrieben, verfahren. Nach 20-maliger Rückführung der Mutterlauge aus der Calciumcarbonatfällstufe in die Lösestufe wurde ein Calciumcarbonat erhalten, dessen Produkteigenschaften mit denen des Beispiels 1 vergleichbar waren.

Die genauen Daten sind in den Tabellen 1 -3 aufgelistet.

Beispiel 3

185 Gew.-Teile NH₄NO₃ wurden in einem Rührbehälter in 350 Gew.-Teilen Wasser gelöst und mit 74 Gew.-Teilen Karbid-Kalk-Hydrat - (Analyse wie im Beispiel 1) versetzt und 10 Minuten lang gerührt. In dem geschlossenen Rührbehälter stellte sich während der Lösephase ein Druck von 1,8 bar ein.

Über eine Druckfiltration wurde die Calciumsalzlösung vom Ungelösten befreit. Die erhaltene Calciumsalzlösung wurde mit 1 Gew.-Teil Aktivkohle versetzt und nach 1o Minuten filtriert. In die klare Calciumsalzlösung wurde ein kohlendioxidhaltiges Verbrennungsgas eingeleitet, das im Mittel 25 Vol% $CO_2$ enthielt. Die Fällstufe wurde drucklos betrieben. Die Gaseinleitung wurde bei einem pH-Wert von 6,4 beendet.

Die Produktwerte sind in den Tabellen 1 -3 aufgeführt.

Beispiel 4 (Recycling-Verfahren)

Die im Beispiel 3 in der Calciumcarbonatfällstufe anfallende Mutterlauge wurde zur Auflösung von weiterem Karbidkalk-Hydrat rückgeführt und mit 74 Gew.-Teilen Karbidkalk-Hydrat (Analyse wie im Beispiel 1) versetzt und weiter, wie im Beispiel 3 beschrieben, verfahren.

Nach 20-maliger Rückführung der Mutterlauge aus der Calciumcarbonatfällstufe in die Lösestufe wurde ein Calciumcarbonat erhalten, dessen Produkteigenschaften in den Tabellen 1 -3 zusammengestellt sind.

Beispiel 5

140 Gew.-Teile Ammonium-Formiat wurden in 800 Gew.-Teilen Wasser gelöst und mit 74 Gew.-Teilen Karbidkalk-Hydrat (Analyse wie im Beispiel 1) versetzt. Die Weiterverarbeitung erfolgte analog zum Beispiel 1.

Die Produktwerte sind in den Tabellen 1 -3 notiert.

Beispiel 6

Die Arbeitsweise des Beispiels 3 wurde angewandt mit der Ausnahme, daß anstelle von Karbidkalk-Hydrat ein handelsüblicher gelöschter Kalk mit folgender Analyse verarbeitet wurde:

| | | |
|---|---|---|
| CaO | 73,2 | Gew% |
| MgO | 0,95 | Gew% |
| $Al_2O_3$ | 0,51 | Gew% |
| $SiO_2$ | 1,1 | Gew% |
| Fe | 0,18 | Gew% |
| Mn | 0,04 | Gew% |
| C, ges. | 0,8 | Gew% |

Der Rückstand aus der Lösestufe enthielt:

| | | |
|---|---|---|
| CaO | 41,6 | Gew% |
| MgO | 8,2 | Gew% |
| $Al_2O_3$ | 4,1 | Gew% |
| $SiO_2$ | 10,4 | Gew% |
| Fe | 1,5 | Gew% |
| Mn | 0,33 | Gew% |
| C, ges. | 6,0 | Gew% |

In den Tabellen 1 -3 wurden die Produkteigenschaften zusammengestellt.

**Beispiel 7**

Die Arbeitsweise des Beispiels 1 wurde wiederholt mit der Änderung, daß anstelle von Karbidkalk-Hydrat ein handelsüblicher gelöschter Kalk mit folgender Analyse verarbeitet wurde:

| | | |
|---|---|---|
| CaO | 75,3 | Gew% |
| MgO | 0,53 | Gew% |
| $Al_2O_3$ | 0,06 | Gew% |
| $SiO_2$ | 0,13 | Gew% |
| Fe | 0,04 | Gew% |
| Mn | 0,02 | Gew% |
| C, ges. | 0,7 | Gew% |

Der Rückstand aus der Lösestufe hatte folgende Analysenwerte:

| | |
|---|---|
| CaO | 47,7 Gew% |
| MgO | 6,2 Gew% |
| $Al_2O_3$ | 0,85 Gew% |
| $SiO_2$ | 2,2 Gew% |
| Fe | 0,72 Gew% |
| Mn | 0,23 Gew% |
| C, ges. | 9,2 Gew% |

In den Tabellen 1 -3 wurde die Produktqualität nach 10 Zyklen aufgenommen.

Analysenergebnisse der Endprodukte

| Gewichtsprozent | | | | | | |
|---|---|---|---|---|---|---|
| Beisp. 1 | Beisp. 2 | Beisp. 3 | Beisp. 4 | Beisp. 5 | Beisp. 6 | Beisp. 7 |
| **CaO** 55,1 | 55,5 | 55,3 | 55,8 | 55,7 | 55,0 | 55,4 |
| **MgO** 0,031 | 0,028 | 0,028 | 0,028 | 0,018 | 0,050 | 0,035 |
| **$Al_2O_3$** < 0,01 | < 0,01 | < 0,01 | < 0,01 | < 0,01 | < 0,01 | < 0,01 |
| **$SiO_2$** < 0,001 | < 0,003 | < 0,001 | 0,005 | 0,003 | 0,003 | 0,004 |
| **Fe** < 0,0001 | 0,0003 | 0,0004 | 0,0003 | 0,0001 | < 0,0001 | < 0,0001 |
| **Mn** < 0,001 | < 0,005 | < 0,001 | < 0,001 | < 0,001 | 0,005 | < 0,001 |
| **Ausbeute bez. auf Ca** 88,0 | 88,0 | 88,5 | 88,5 | 91,0 | 89,0 | 95,0 |

## TABELLE 2

### Kornfeinheit der Calciumcarbonate

| | % <44 /u | % <31 /u | % <22 /u | % <16 /u | % <11 /u | % <7,8 /u | % <5,5 /u |
|---|---|---|---|---|---|---|---|
| Beispiel 1 | 100 | 100 | 89 | 67 | 41 | 24 | 14 |
| Beispiel 2 | 99 | 94 | 83 | 66 | 47 | 29 | 18 |
| Beispiel 3 | 100 | 99 | 85 | 61 | 34 | 18 | 10 |
| Beispiel 4 | 99 | 92 | 82 | 65 | 46 | 29 | 16 |
| Beispiel 5 | 99 | 84 | 59 | 34 | 15 | 10 | 8 |
| Beispiel 6 | 99 | 98 | 87 | 70 | 43 | 22 | 13 |
| Beispiel 7 | 100 | 98 | 83 | 58 | 33 | 18 | 10 |

**TABELLE 3**

Weißgrad der Calciumcarbonate

| | Weißgrad in % |
|---|---|
| $CaCO_3$, Riedel de Haën | 100,0 (Vergleichsstandard) |
| Beispiel 1 | 100,1 |
| Beispiel 2 | 99,9 |
| Beispiel 3 | 100,1 |
| Beispiel 4 | 99,8 |
| Beispiel 5 | 99,6 |
| Beispiel 6 | 100,0 |
| Beispiel 7 | 100,3 |

## Ansprüche

1. Verfahren zur Herstellung von feinteiligem Calciumcarbonat großer Reinheit und hohem Weißgrad durch Umsetzung von wäßriger Calciumhydroxidaufschlämmung mit einem Kohlendioxid enthaltenden Gas, dadurch gekennzeichnet, daß in einer Lösestufe eine Calciumhydroxidaufschlämmung mit Ammonium-oder Aminsalz umgesetzt wird, in einer anschließenden Filtrationsstufe die gebildete Calciumsalzlösung von Ungelöstem befreit wird, die Calciumsalzlösung mit Aktivkohle geklärt wird und nach Abtrennen der Aktivkohle in einer Fällstufe aus der Calciumsalzlösung durch Umsetzung mit Kohlendioxid das Calciumcarbonat ausgefällt und, nach Abtrennung der gebildeten Mutterlauge, gewaschen und getrocknet wird.

2. Verfahren nach Anspruch 1, dadurch gekennzeichnet, daß in der Lösestufe als Ammoniumsalz $NH_4NO_3$, $NH_4Cl$ oder $H-CO_2NH_4$ in fester oder in in Wasser gelöster Form verwendet wird.

3. Verfahren nach Anspruch 1, dadurch gekennzeichnet, daß in der Lösestufe als Aminsalz das Chlorid von kurzkettigen primären oder sekundären Aminen in fester oder in in Wasser gelöster Form verwendet wird.

4. Verfahren nach einem der Ansprüche 1 bis 3, dadurch gekennzeichnet, daß in der Lösestufe ein äquivalentes Verhältnis von $Ca : NH_4^+ = 1 : 2,0$

bis 2,2 oder von Ca : $R_iNH_3^+$ = 1 : 2,0 bis 2,2 oder von Ca : $R_iR_2NH_2^+$ = 1 : 2,0 bis 2,2 eingestellt wird.

5. Verfahren nach einem der Ansprüche 1 bis 4, dadurch gekennzeichnet, daß in der Lösestufe die Umsetzung des Ammonium-oder Aminsalzes mit der Calciumhydroxidaufschlämmung in der 1-bis 11-fachen, insbesondere 3-bis 6-fachen Gewichtsmenge Wasser erfolgt, bezogen auf die eingesetzte Menge wasserfreies KalkHydrat.

6. Verfahren nach einem der Ansprüche 1 bis 5, dadurch gekennzeichnet, daß die Calciumsalzlösung nach der Filtrationsstufe mit 0,1 bis 3,0 Gew% Aktivkohle, bezogen auf die eingesetzte Menge wasserfreies Kalk-Hydrat, geklärt wird.

7. Verfahren nach einem der Ansprüche 1 bis 6, dadurch gekennzeichnet, daß die Lösestufe in einem Rührbehälter unter einem Druck von 0,1 bis 10 bar, insbesondere bei Normaldruck betrieben wird.

8. Verfahren nach einem der Ansprüche 1 bis 7, dadurch gekennzeichnet, daß die Filtrationsstufe zur Reinigung der Calciumsalzlösung von dem Ungelösten eine Druckfiltration ist.

9. Verfahren nach einem der Ansprüche 1 bis 8, dadurch gekennzeichnet, daß die Abtrennung der Aktivkohle eine Druckfiltration ist.

10. Verfahren nach einem der Ansprüche 1 bis 9, dadurch gekennzeichnet, daß in der Fällstufe in die gereinigte Calciumsalzlösung reines Kohlendioxid oder ein Kohlendioxid enthaltendes Gas eingeleitet wird, bis ein End-pH-Wert von 4,0 bis 8,0, insbesondere von 5,0 bis 7,0, erreicht ist.

11. Verfahren nach einem der Ansprüche 1 bis 10, dadurch gekennzeichnet, daß die Fällstufe in einem Rührbehälter unter einem $CO_2$-Partialdruck von 0,1 bis 10 bar betrieben wird.

12. Verfahren nach einem der Ansprüche 1 bis 11, dadurch gekennzeichnet, daß nach Abtrennung des Calciumcarbonates von der gebildeten Mutterlauge das Calciumcarbonat mit der 1-bis 5-fachen Wassermenge, bezogen auf die Calciumcarbonatmenge, gewaschen wird.

13. Verfahren nach einem der Ansprüche 1 bis 12, dadurch gekennzeichnet, daß die in der Fällstufe gebildete Mutterlauge rückgeführt wird in die Lösestufe zur erneuten Umsetzung mit Kalk-Hydrat.

14. Verfahren nach einem der Ansprüche 1 bis 13, dadurch gekennzeichnet, daß verunreinigte Calciumhydroxidaufschlämmungen, insbesondere Karbidkalk-Hydrat, einem Nebenprodukt der elektrothermischen Acetylenerzeugung aus Kalk und Kohle, als Ausgangsprodukt verarbeitet wird.

15. Verfahren nach einem der Ansprüche 1 bis 14, dadurch gekennzeichnet, daß die anfallenden Waschwässer in aufkonzentrierter Form rückgeführt werden.

16. Verfahren nach Anspruch 15, dadurch gekennzeichnet, daß zu der zur Aufkonzentrierung der Waschwässer erforderlichen Energie die Verbrennungswärme von Kohlenmonoxid zu Kohlendioxid beigesteuert wird.